# EUROPÄISCHE PATENTANMELDUNG

(11) **EP 4 559 298 A1**
(43) Veröffentlichungstag der Anmeldung: **28.05.2025**
(21) Anmeldenummer: 24208443.2
(22) Anmeldetag: 23.10.2024
(51) Int. Cl.: A01B 69/00, A01B 69/04, B62D 12/02, B62D 13/02

(54) **LENKVERFAHREN FÜR EINE LANDMASCHINE**

(30) Priorität: 09.11.2023 DE 102023131189
(71) Anmelder: KRONE Agriculture SE, 48480 Spelle (DE); Lemken GmbH & Co KG, 46519 Alpen (DE)
(72) Erfinder: Müter, Matthias, 53179 Bonn (DE); Mählmann-Dunker, Hannes, 27251 Neuenkirchen (DE); Westphal, Steffen, 49328 Melle (DE)
(74) Vertreter: Engelmann, Kristiana

(57) **Zusammenfassung**

Die Erfindung betrifft ein Lenkverfahren für eine Landmaschine (10), welche während einer Straßenfahrt an ein Zugfahrzeug (30) angehängt ist, welches entlang einer Zugfahrzeug-Fahrspur (Rz) fährt, wobei:
- ausgehend von einer Mehrzahl von möglichen Lenkmodi (L) der Landmaschine (10), für wenigstens einen Teil der Straßenfahrt ein Lenkmodus (L) festgelegt wird (S170),
- basierend auf sensorischer Messung (S180) Kinematikdaten ermittelt werden (S190), die eine Kinematik der Landmaschine (10) beschreiben,
- basierend auf sensorischer Messung (S180) Fahrspur-Informationen betreffend das Zugfahrzeug (30) ermittelt werden (S200) und die Kinematikdaten hiermit abgeglichen werden (S220),
- in Abhängigkeit vom Ergebnis des Abgleichs sowie in Abhängigkeit vom aktuell festgelegten Lenkmodus (L) automatisch Lenkkommandos (K₁, K₂) für wenigstens eine lenkbare Achse (14, 15) der Landmaschine (10) ermittelt werden (S230), um die Landmaschine (10) angepasst an die Zugfahrzeug-Fahrspur (R_{F}) zu lenken, und
- die Landmaschine (10) automatisch durch die Lenkkommandos (K₁, K₂) gelenkt wird (S240).

## Beschreibung

Die vorliegende Erfindung betrifft ein Lenkverfahren für eine Landmaschine nach dem Oberbegriff von Anspruch 1, eine Landmaschine nach dem Oberbegriff von Anspruch 13, ein Gespann nach dem Oberbegriff von Anspruch 14 sowie eine Steuervorrichtung für eine Landmaschine nach dem Oberbegriff von Anspruch 15.

Bereits seit Langem sind zum einen Landmaschinen bekannt, die bei der Feldbearbeitung von einer Zugmaschine gezogen werden, sowie zum anderen selbstfahrende Landmaschinen, die bei der Feldbearbeitung von einem Fahrer gesteuert werden. Diese Maschinen können auch bei Überführungsfahrten oder Straßenfahrten, also auf dem Weg vom oder zum Feld, in gleicher Weise bewegt werden, also entweder von der Zugmaschine gezogen oder selbstfahrend durch den Fahrer gelenkt. Bei gezogenen Landmaschinen kann die Bremse vom Zugfahrzeug aus mit Energie versorgt und gesteuert werden. Soweit vorhanden, gilt dies auch für lenkbare Achsen der gezogenen Landmaschine. Daneben kommen in zunehmendem Maße auch autonom arbeitende Landmaschinen zum Einsatz, die über einen eigenen Antrieb und eigene Lenkung verfügen und die Feldbearbeitung selbstständig, ohne Steuerkommandos eines Fahrers durchführen. Da diese Fahrzeuge eine Überführungsfahrt im Straßenverkehr nicht autonom durchführen können, müssen sie zum Beispiel auf einen Tieflader verladen werden, was aufwändig ist und die Kosten für den gesamten Einsatz erhöht.

Es ist bereits vorgeschlagen worden, eine autonome Landmaschine für eine Überführungsfahrt an ein Zugfahrzeug anzuhängen, zum Beispiel über eine Deichsel. Es ist möglich, auch ohne Lenkbefehle seitens des Zugfahrzeugs die Landmaschine zu lenken. Hierzu kann beispielsweise mittels Sensoren ein Deichselwinkel der Deichsel relativ zu einem der Fahrzeuge detektiert werden. Ebenso ist es möglich, über Trägheitssensoren auf die Landmaschine wirkende Kräfte zu detektieren. Durch diese oder andere sensorische Messungen kann ermittelt werden, wie sich die Landmaschine im Verhältnis zur Fahrspur des Zugfahrzeugs bewegt und bei Bedarf können durch die Lenkung der Landmaschine Korrekturen vorgenommen werden. Allerdings hängt die optimale Lenkstrategie von verschiedenen Faktoren ab. So können sich die Abmessungen der Landmaschine ändern, zum Beispiel durch unterschiedliche angekoppelte Anbaugeräte. Auch bei gleichbleibenden Abmessungen können in unterschiedlichen Fahrsituationen oder Verkehrssituationen unterschiedliche Lenkstrategien vorteilhaft sein.

Aufgabe der Erfindung ist es, die Lenkung einer an ein Zugfahrzeug angehängten Landmaschine bei einer Straßenfahrt zu optimieren.

Die Aufgabe wird gelöst mit einem Lenkverfahren mit den Merkmalen des unabhängigen Patentanspruchs 1. Vorteilhafte Ausführungsformen sind den abhängigen Ansprüchen entnehmbar.

Dafür wird ein Lenkverfahren für eine Landmaschine geschaffen, welche während einer Straßenfahrt an ein Zugfahrzeug angehängt ist, welches entlang einer Zugfahrzeug-Fahrspur fährt, wobei:
- ausgehend von einer Mehrzahl von möglichen Lenkmodi der Landmaschine, für wenigstens einen Teil der Straßenfahrt ein Lenkmodus festgelegt wird,
- basierend auf sensorischer Messung Kinematikdaten ermittelt werden, die eine Kinematik der Landmaschine beschreiben,
- basierend auf sensorischer Messung Fahrspur-Informationen betreffend das Zugfahrzeug ermittelt werden und die Kinematikdaten hiermit abgeglichen werden,
- in Abhängigkeit vom Ergebnis des Abgleichs sowie in Abhängigkeit vom aktuell festgelegten Lenkmodus automatisch Lenkkommandos für wenigstens eine lenkbare Achse der Landmaschine ermittelt werden, um die Landmaschine angepasst an die Zugfahrzeug-Fahrspur zu lenken, und
- die Landmaschine automatisch durch die Lenkkommandos gelenkt wird.

Die Landmaschine kann auch als landwirtschaftliche Arbeitsmaschine bezeichnet werden. Es kann sich insbesondere um eine Erntemaschine wie ein Feldhäcksler, ein Mähdrescher, eine Ballenpresse oder ein Ladewagen handeln. Es könnte sich aber auch zum Beispiel um einen Zetter, einen Pflug, einen Düngerstreuer, ein Güllefass oder dergleichen handeln. Die Landmaschine ist zur Feldbearbeitung eingerichtet, beispielsweise zum Pflügen, Düngen, Mähen, Zetten, zur Erntegutaufnahme oder dergleichen. Sie kann wenigstens ein Anbaugerät aufweisen, welches je nach Bedarf an einen Fahrzeugkörper gekoppelt wird, wobei der Fahrzeugkörper selbst für keine spezifische Art der Feldbearbeitung eingerichtet ist. Sie wird auch dann im Sinne der Erfindung als Landmaschine angesehen, wenn bei der Straßenfahrt kein Anbaugerät angekoppelt ist. Es kann sich bei der Landmaschine auch um einen Anhänger handeln, der bei der Feldbearbeitung von einer Zugmaschine gezogen wird. In diesem Fall wird sie auch bei einer Straßenfahrt oder Überführungsfahrt gezogen. Die Landmaschine kann allerdings auch einen eigenen Fahrantrieb aufweisen, der sie sowohl bei der Feldbearbeitung als auch während der Straßenfahrt antreibt. Sie kann insbesondere als autonomes Fahrzeug ausgebildet sein, welches dazu eingerichtet ist, eine Feldbearbeitung ohne Steuerkommandos eines Fahrers oder Bedieners durchzuführen. Es wäre allerdings auch denkbar, dass die Landmaschine einen Führungsstand oder eine Fahrerkabine aufweist und bedarfsweise von einem Fahrer gesteuert werden kann. Im Zuge des erfindungsgemäßen Lenkverfahrens erfolgt allerdings eine automatische Lenkung, wie nachfolgend erläutert wird.

Beim erfindungsgemäßen Verfahren ist die Landmaschine während einer Straßenfahrt an ein Zugfahrzeug angehängt, welches entlang einer Zugfahrzeug-Fahrspur fährt. Der Begriff "Straßenfahrt" ist hier nicht streng auszulegen und bezieht sich auch auf Fahrten auf unbefestigten Wegen. Er wird hier gleichbedeutend mit "Überführungsfahrt" benutzt, bezeichnet also eine Fahrt vom oder zum Einsatzort. Das Zugfahrzeug kann selbst eine Landmaschine sein, es kann sich aber auch um ein anderes Fahrzeug handeln, zum Beispiel einen Lkw. Normalerweise ist das Zugfahrzeug ein Kraftfahrzeug mit eigenen Fahrantrieb, es könnte allerdings auch zum Beispiel ein Anhänger ohne eigenen Antrieb sein, der seinerseits gezogen wird. Es kann sich um ein Fahrzeug handeln, das durch einen Fahrer gelenkt wird oder um ein autonomes Fahrzeug. Das Zugfahrzeug fährt entlang einer Route oder Fahrspur, die hier und im weiteren als Zugfahrzeug-Fahrspur bezeichnet wird. Die Zugfahrzeug-Fahrspur kann von kurzfristig erfolgenden Lenkaktionen eines Fahrers oder eines autonomen Lenksystems abhängen und unterliegt potenziell ständigen Veränderungen. Sie lässt sich somit nur in begrenztem Maß für die Zukunft vorhersagen. Die Landmaschine ist an das Zugfahrzeug angehängt, was allgemein bedeutet, dass das Zugfahrzeug bei Vorwärtsfahrt vorausfährt und die Landmaschine zieht. Bei Rückwärtsfahrt wird die Landmaschine vom Zugfahrzeug geschoben. Die Landmaschine ist angehängt, das heißt sie ist mechanisch mit dem Zugfahrzeug verbunden, allerdings nicht starr, sondern beweglich. Die Verbindung zwischen Zugfahrzeug und Landmaschine weist wenigstens einen Freiheitsgrad auf. U.A. aufgrund des wenigstens einen Freiheitsgrades fährt die Landmaschine nicht zwangsläufig entlang der Zugfahrzeug-Fahrspur. Optional kann das Zugfahrzeug eine Bremsanlage der Landmaschine betätigen und/oder die Landmaschine mit Energie versorgen. Diese könnte aber auch einen eigenen Energiespeicher und/oder einen eigenen Energieerzeuger nutzen, um Energie in mechanischer, hydraulischer, elektrischer oder anderer Form bereitzustellen.

Gemäß einem Schritt des erfindungsgemäßen Verfahrens wird, ausgehend von einer Mehrzahl von möglichen Lenkmodi der Landmaschine, für wenigstens einen Teil der Straßenfahrt ein Lenkmodus festgelegt. Man kann auch sagen, dass ein Lenkmodus der Landmaschine oder ein Lenkmodus für die Landmaschine festgelegt wird. Der Lenkmodus entscheidet darüber, in welcher Weise die Landmaschine gelenkt wird. Er charakterisiert und bestimmt das Lenkverhalten der Landmaschine. Der Lenkmodus kann ein oder mehrere Lenkparameter beinhalten, die festgelegt werden. Nach seiner Festlegung bleibt der Lenkmodus für wenigstens einen Teil der Straßenfahrt erhalten. Das heißt er gilt für eine gewisse Zeitspanne oder eine Wegstrecke. Diese können vorab festgelegt sein oder variabel. In letzterem Fall bleibt der festgelegte Lenkmodus bis auf Weiteres erhalten. Der Lenkmodus, der festgelegt wird, ist einer aus einer Mehrzahl möglicher Lenkmodi der Landmaschine und ist aus diesen ausgewählt. Insgesamt können unterschiedliche Anzahlen von Lenkmodi vorgesehen sein. Sofern der jeweilige Lenkmodus durch einen Lenkparameter beschreibbar ist, der quasikontinuierlich variierbar ist, ergäbe sich eine quasi "unendlich" große Zahl möglicher Lenkmodi. Die Anzahl ist in der Praxis auf einen endlichen, aber möglicherweise sehr großen Wert beschränkt. Der Lenkmodus kann innerhalb einer Steuereinheit festgelegt werden, die verschiedene Funktionen im Zusammenhang mit der Lenkung der Landmaschine ausführt. Sie kann vorteilhaft Teil der Landmaschine sein, gegebenenfalls könnte sie aber auch ganz oder teilweise extern angeordnet sein, zum Beispiel am Zugfahrzeug. Sie kann auch mehrere, räumlich getrennte Komponenten aufweisen. Funktionen der Steuereinheit können teilweise softwaremäßig realisiert sein. Die Festlegung des Lenkmodus innerhalb der Steuereinheit bedeutet allerdings nicht zwangsläufig, dass die Festlegung durch die Steuereinheit erfolgt.

Gemäß einem weiteren Schritt des Verfahrens werden basierend auf sensorischer Messung Kinematikdaten ermittelt, die eine Kinematik der Landmaschine beschreiben. Die Ermittlung der Kinematikdaten erfolgt basierend auf sensorischer Messung, also auf Grundlage einer Messung mittels wenigstens eines Sensors. Es können unterschiedliche Sensoren eingesetzt werden, wie nachfolgend noch erläutert wird. Der jeweilige Sensor kann an der Landmaschine angeordnet sein oder in diese integriert sein. Es wäre prinzipiell auch denkbar, dass es sich um einen externen Sensor handelt. Die Kinematikdaten basieren auf der sensorischen Messung, was die Möglichkeit einschließt, dass die Kinematikdaten auch mit durch die Messung gewonnenen Messwerten identisch sind oder in trivialer Weise mit diesen zusammenhängen. Insbesondere kann allerdings eine Berechnung der Kinematikdaten erfolgen, die zum Beispiel auf einer Verknüpfung von Messwerten beruht. Es könnte sich beispielsweise auch um eine zeitliche Integration handeln, um beispielsweise aus einer ein- oder mehrdimensionalen Beschleunigung eine Geschwindigkeit sowie gegebenenfalls eine Position zu bestimmen, wobei Anfangswerte angegeben werden müssen, die sich aus der Integration nicht ergeben. In jedem Fall wird durch die Kinematikdaten eine Kinematik der Landmaschine beschrieben, also die Bewegung der Landmaschine und/oder ihre aktuelle räumliche Anordnung. Die Kinematikdaten können durch die oben genannte Steuereinheit ermittelt werden. Die Steuereinheit kann drahtlos oder drahtgebunden Messwerte von dem oben genannten wenigstens einen Sensor sowie gegebenenfalls weitere Daten empfangen. Innerhalb der Steuereinheit kann auch der Lenkmodus festgelegt werden.

Bevorzugt werden Kinematikdaten ermittelt, die einen Ort, eine Geschwindigkeit, eine Beschleunigung, eine Orientierung, eine Winkelgeschwindigkeit und/oder eine Winkelbeschleunigung beschreiben. Insbesondere können die jeweiligen Kinematikdaten alle sechs der genannten Größen beschreiben. Die genannten Größen werden klassischerweise mit dem Begriff der Kinematik assoziiert und beschreiben die Position, einschließlich der Orientierung, sowie die zeitliche Veränderung derselben. Die Geschwindigkeit und die Beschleunigung entsprechen der ersten und zweiten zeitlichen Ableitung des Ortes. Jede der genannten Größen ist normalerweise eine wenigstens zweidimensionale Größe, gegebenenfalls auch eine dreidimensionale Größe. Ein zweidimensionaler Ort kann durch eine X- und eine Y-Koordinate charakterisiert werden, ein dreidimensionaler Ort zusätzlich durch eine Z-Koordinate. Die Winkelgeschwindigkeit und die Winkelbeschleunigung entsprechen der ersten und zweiten zeitlichen Ableitung der Orientierung. Jede dieser Größen ist wenigstens eindimensional, soweit eine Orientierung etc. innerhalb einer Ebene betrachtet wird. Es können aber auch zwei- oder dreidimensionale Orientierungen etc. betrachtet werden, die durch zwei oder drei Winkel charakterisiert werden können. Ein Beispiel wären Gierwinkel, Rollwinkel und Nickwinkel.

Des Weiteren werden basierend auf sensorischer Messung Fahrspur-Informationen betreffend das Zugfahrzeug ermittelt und die Kinematikdaten werden hiermit abgeglichen. Auch die hier erwähnte sensorische Messung wird mittels wenigstens eines Sensors durchgeführt. Es ist möglich, dass wenigstens ein Sensor und/oder die von diesem gelieferten Messwerte ganz oder teilweise sowohl zur Bestimmung der Kinematikdaten als auch zur Bestimmung der Fahrspur-Informationen verwendet werden. Auch die Fahrspur-Informationen können durch die Steuereinheit ermittelt werden. Die Fahrspur-Informationen betreffen das Zugfahrzeug und stehen insofern in Zusammenhang mit der Zugfahrzeug-Fahrspur. Allerdings erlauben sie normalerweise keine exakte Beschreibung der Zugfahrzeug-Fahrspur, beispielsweise aufgrund von Messfehlern numerischer Ungenauigkeiten oder anderer Einflüsse. In jedem Fall kann die Zugfahrzeug-Fahrspur anhand der Fahrspur-Informationen wenigstens in begrenztem Maße sowie näherungsweise charakterisiert werden. Mit diesen Fahrspur-Informationen können die ermittelten Kinematikdaten abgeglichen werden. Dieser Abgleich liefert eine Aussage darüber, wie die Landmaschine in Relation zur Zugfahrzeug-Fahrspur positioniert ist und/oder wie sie sich in Relation zur Zugfahrzeug-Fahrspur bewegt. Da die Zugfahrzeug-Fahrspur im Allgemeinen nicht exakt bekannt ist, ist das Ergebnis des Abgleichs zwangsläufig ebenfalls im Allgemeinen nicht exakt. Allerdings sind gewisse Ungenauigkeiten akzeptabel und gefährden nicht das Funktionsprinzip des erfindungsgemäßen Lenkverfahrens.

In einem weiteren Verfahrensschritt werden in Abhängigkeit vom Ergebnis des Abgleichs sowie in Abhängigkeit vom aktuell festgelegten Lenkmodus automatisch Lenckommandos für wenigstens eine lenkbare Achse der Landmaschine ermittelt, um die Landmaschine angepasst an die Zugfahrzeug-Fahrspur zu lenken. Dieser Verfahrensschritt kann wiederum durch die Steuereinheit durchgeführt werden. Die Landmaschine kann eine oder mehrere lenkbare Achsen aufweisen. Die jeweilige Achse ist durch wenigstens einen Aktor lenkbar, wobei der tatsächliche Lenkwinkel durch einen zugeordneten Sensor überprüft werden kann. Im Falle mehrerer lenkbarer Achsen können Lenkkommandos für alle Achsen ermittelt werden. Bei den Lenkkommandos kann es sich um digitale oder analoge Signale handeln. In jedem Fall enthält ein Lenckommando eine Information über den jeweiligen Lenkwinkel der lenkbaren Achse. Die Lenkkommandos werden ermittelt, um die Landmaschine angepasst an die Zugfahrzeug-Fahrspur zu lenken. "Angepasst an die Zufahrzeug-Fahrspur" bedeutet nicht zwangsläufig, dass die Landmaschine möglichst exakt der Zufahrzeug-Fahrspur folgen soll. In jedem Fall bildet die Zugfahrzeug-Fahrspur jedoch eine Orientierung für die Lenkung der Landmaschine. Die Lenkkommandos werden in Abhängigkeit von Ergebnis des Abgleichs ermittelt. Das heißt anhand des Abgleichs wird entschieden, wie die Landmaschine, basierend auf den ermittelten Kinematikdaten, zu lenken ist, um die vorgesehene Anpassung an die Zugfahrzeug-Fahrspur (soweit sie anhand der Fahrspur-Informationen bekannt ist) zu erreichen oder aufrechtzuerhalten. Dabei erfolgt die Ermittlung auch abhängig vom Lenkmodus. Das heißt bei gleichen Fahrspur-Informationen und gleichen Kinematikdaten können unterschiedliche Lenkkommandos ermittelt werden, je nachdem welcher Lenkmodus eingestellt wurde. Hier und im Folgenden bedeutet die Formulierung "in Abhängigkeit von" immer, dass wenigstens eine Abhängigkeit von der genannten Größe vorliegt. Dies schließt immer die Möglichkeit ein, dass zusätzlich eine Abhängigkeit von wenigstens einer weiteren Größe gegeben ist. Die Formulierung ist somit gleichbedeutend mit "wenigstens anteilig in Abhängigkeit von".

In einem weiteren Schritt wird die Landmaschine automatisch durch die Lenkkommandos gelenkt. Auch dies kann durch die oben genannte Steuereinheit erfolgen, die zu diesem Zweck drahtlos oder drahtgebunden mit wenigstens einem Lenkaktor verbunden sein kann, der der wenigstens einen lenkbaren Achse zugeordnet ist.

Der Vorteil des erfindungsgemäßen Lenkverfahrens liegt darin, dass über den festgelegten Lenkmodus eine bedarfsgerechte automatische Lenkung der Landmaschine möglich ist. Diese kann durch Festlegung eines geeigneten Lenkmodus an unterschiedliche Situationen und/oder unterschiedliche Verhältnisse angepasst werden. Das Lenkverhalten der Landmaschine ist somit nicht fest vorgegeben, was je nach Situation suboptimal sein könnte, sondern kann flexibel angepasst werden.

Eine Ausführungsform sieht vor, dass die ermittelten Fahrspur-Informationen einer Berechnungs-Fahrspur des Zugfahrzeugs entsprechen und die Kinematikdaten einer Ist-Fahrspur der Landmaschine entsprechen, wobei die Ist-Fahrspur mit einer Soll-Fahrspur abgeglichen wird, die von der Berechnungs-Fahrspur in Abhängigkeit vom aktuell festgelegten Lenkmodus abgeleitet ist, und in Abhängigkeit vom Ergebnis des Abgleichs die Lenkkommandos ermittelt werden. Die Berechnungs-Fahrspur wäre idealerweise identisch mit der Zugfahrzeug-Fahrspur oder mit einem Teilstück derselben. In der Realität besteht im Allgemeinen eine Abweichung von der Zugfahrzeug-Fahrspur, die allerdings innerhalb gewisser Grenzen akzeptabel ist. Die Berechnungs-Fahrspur kann bis zum aktuellen Zeitpunkt ermittelt werden, sie kann aber auch für eine gewisse Zeit in die Zukunft extrapoliert werden. Letzteres kann insbesondere bei einer Rückwärtsfahrt sinnvoll sein, bei welcher die Landmaschine gewissermaßen dem Zugfahrzeug vorausfährt. Die Ist-Fahrspur ist entweder Teil der Kinematikdaten, die ermittelt werden, oder sie ist mit diesen Kinematikdaten identisch. Auch hierbei kann aufgrund von Messfehlern, numerischen Fehlern und anderen Einflüssen eine Abweichung zwischen der Ist-Fahrspur und der tatsächlich gefahrenen Fahrspur der Landmaschine bestehen, was allerdings ebenfalls innerhalb gewisser Grenzen akzeptabel ist. Auch die Ist-Fahrspur kann bis zum aktuellen Zeitpunkt ermittelt werden oder für eine gewisse Zeit in die Zukunft extrapoliert werden. In letzterem Fall kann zum Beispiel zugrunde gelegt werden, dass der Lenkwinkel der wenigstens einen lenkbaren Achse gegenüber dem aktuellen Zustand nicht verändert wird. Es wird eine Soll-Fahrspur für die Landmaschine ermittelt, die von der Berechnungs-Fahrspur abgeleitet wird. Sie kann mit der Berechnungs-Fahrspur identisch sein, kann aber auch in vorhergesehener Weise von dieser abweichen, zum Beispiel um einen seitlichen Versatz in einer Kurve zu realisieren. Dabei wird die Soll-Fahrspur in Abhängigkeit vom Lenkmodus von der Berechnungs-Fahrspur abgeleitet. Das heißt, je nach Lenkmodus können aus einer bestimmten Berechnungs-Fahrspur unterschiedliche Soll-Fahrspuren abgeleitet werden. Durch einen Abgleich der Soll-Fahrspur mit der Ist-Fahrspur kann ermittelt werden, wie die Landmaschine gelenkt werden muss, um sich in vorgesehener Weise relativ zum Zugfahrzeug zu bewegen. Da die Soll-Fahrspur von der Berechnungs-Fahrspur abgeleitet ist, findet hierbei auch ein (indirekter) Abgleich mit der Berechnungs-Fahrspur statt. Die Lenkkommandos werden dann entsprechend einer möglichen Abweichung der Ist-Fahrspur von der Soll-Fahrspur ermittelt.

Gemäß einer Ausführungsform wird der Lenkmodus wenigstens teilweise durch eine Benutzereingabe festgelegt. Das heißt ein Benutzer entscheidet, welchen Lenkmodus er aktuell für angemessen hält, und tätigt über eine Benutzerschnittstelle eine entsprechende Eingabe. Die Benutzerschnittstelle kann an der Landmaschine angeordnet sein. Vorteilhaft allerdings sollte sie entweder mobil sein, also zum Beispiel an einem Smartphone, Tablet oder dergleichen angeordnet sein, oder sie sollte am Zugfahrzeug angeordnet sein. Sie kann drahtlos und/oder drahtgebunden mit der Landmaschine verbunden sein, zum Beispiel mit der oben genannten Steuereinheit. Die Festlegung des Lenkmodus kann bei dieser Ausführungsform optional vollständig durch Benutzereingabe erfolgen.

Gemäß einer weiteren Ausführungsform wird der Lenkmodus wenigstens teilweise automatisch festgelegt. Automatisch bedeutet, dass die Festlegung ohne Zutun eines Benutzers erfolgt und der Benutzer insofern von der Auswahl des Lenkmodus ausgeschlossen ist. Die automatische Auswahl kann durch die oben genannte Steuereinheit erfolgen.

Es sind auch Mischformen denkbar, wobei die Auswahl lediglich teilweise durch die Benutzereingabe erfolgt. Zum Beispiel kann in bestimmten Situationen wenigstens ein Lenkmodus gesperrt werden, so dass dieser nicht vom Benutzer gewählt werden kann. Auch wäre es denkbar, dass situationsbedingt unterschiedliche Lenkmodi automatisch gewählt werden, die aus Sicht des Benutzers als ein und derselbe Lenkmodus erscheinen. Das heißt der Benutzer trifft eine Auswahl, wodurch beispielsweise einige Lenkparameter festgelegt werden, während andere Lenkparameter automatisch festgelegt werden, ohne dass der Benutzer dies beeinflussen kann und gegebenenfalls ohne dass er dies überhaupt erkennt. Dabei könnte die Feinabstimmung des Lenkmodus gewissermaßen automatisch erfolgen. Es wäre auch denkbar, dass der Benutzer in bestimmten Situationen über den Lenkmodus frei entscheiden kann, während in anderen Situationen die Auswahl automatisch getroffen wird. Letzteres kann geschehen, um den Benutzer zu entlasten. Es wären aber auch Sicherheitsgründe hierfür denkbar. Beispielsweise kann der Benutzer einen Lenkmodus wählen, der dann bis auf weiteres aktiv bleibt. Unter bestimmten Umständen kann der Lenkmodus dann automatisch deaktiviert werden und stattdessen ein anderer Lenkmodus ausgewählt werden.

Bevorzugt ist vorgesehen, dass zumindest eine Neufestlegung des Lenkmodus während der Straßenfahrt ermöglicht wird, insbesondere dass die Neufestlegung während der Straßenfahrt erfolgt. Das heißt der Lenkmodus ist nicht für die gesamte Straßenfahrt festgelegt, sondern während der Straßenfahrt erfolgt eine erneute Festlegung, das heißt ein Wechsel des Lenkmodus.

Gemäß einer Ausführungsform ist die Landmaschine zum Beispiel über zwei gegeneinander bewegliche Kupplungsteile mit dem Zugfahrzeug verbunden, von denen eines starr mit einem Fahrzeugkörper des Zugfahrzeugs verbunden ist und das andere starr mit einem Fahrzeugkörper der Landmaschine. Denkbar wäre zum Beispiel eine Kugelkopfkupplung, Bolzenkupplung o.Ä. Die Kupplung würde das einzige Gelenk definieren, welches einen oder mehrere Freiheitsgrade aufweist. Eine andere Ausgestaltung sieht vor, dass die Landmaschine durch eine zug- und druckübertragende Deichsel mit dem Zugfahrzeug verbunden ist, welche sowohl auf Seiten des Zugfahrzeugs als auch auf Seiten der Landmaschine schwenkbar angebunden ist. Die Deichsel kann normalerweise als starrer Körper angesehen werden, wenngleich es möglich ist, dass beispielsweise auch beim Normalbetrieb eine geringfügige elastische Verformung der Deichsel erfolgt. Jedenfalls weist die Deichsel in sich keine biegeweichen Bereiche oder Gelenke auf. Allerdings ist es denkbar, dass die Deichsel manuell oder aktorisch verstellbar ist, zum Beispiel längenverstellbar, wobei sie aus zwei teleskopierend miteinander verbundenen Teilen bestehen könnte. Die Deichsel verbindet das Zugfahrzeug mit der Landmaschine und überträgt bei Vorwärtsfahrt eine Zugkraft und bei Rückwärtsfahrt eine Druckkraft vom Zugfahrzeug auf die Landmaschine. Die Deichsel kann ein separates Bauteil darstellen, das für die Zwecke der Straßenfahrt zeitweise mit Zugfahrzeug und Landmaschine verbunden wird. Sie kann auch dauerhaft in das Zugfahrzeug oder die Landmaschine integriert sein, wobei sie mit einem Fahrzeugkörper des jeweiligen Fahrzeugs schwenkbar verbunden ist. Die Verbindung zu dem jeweils anderen Fahrzeug kann über eine Kupplung (zum Beispiel Kugelkopfkupplung etc.) hergestellt werden. In jedem Fall ist die Deichsel beiderseits schwenkbar angebunden, wobei wenigstens eine eindimensionale Schwenkbarkeit gegeben ist, also eine Schwenkbarkeit um einen eindimensionalen Winkel in der horizontalen Ebene. Zusätzlich ist normalerweise auch eine zumindest begrenzte Schwenkbarkeit in vertikaler Richtung gegeben, so dass von einer zweidimensionalen Schwenkbarkeit gesprochen werden kann. Die Deichsel kann jeweils frei von Rückstellkräften schwenkbar sein, es wäre allerdings auch möglich, dass sie über wenigstens ein Federelement mit dem Zugfahrzeug und/oder mit der Landmaschine verbunden ist.

Es ist dabei möglich, dass in wenigstens einem Lenkmodus eine Vorderachse der Landmaschine durch die Deichsel zwangsgelenkt ist. Das heißt in dem entsprechenden Lenkmodus - evtl. auch in allen Lenkmodi - gibt ein Deichselwinkel der Deichsel gegenüber dem Fahrzeugkörper der Landmaschine einen Lenkwinkel der Vorderachse vor. Die entsprechende Zwangslenkung kann mechanisch realisiert sein, was die Möglichkeit einer fluidmechanischen, zum Beispiel hydraulischen oder pneumatischen Kopplung einschließt. Es könnte aber auch eine sensorisch-aktorische Kopplung gegeben sein, mit wenigstens einem Sensor, welcher den Deichselwinkel detektiert, und wenigstens einem Aktor, der den Lenkwinkel einstellt. Dabei könnte durch die Steuereinheit der Aktor so angesteuert werden, dass ein bestimmter Wert des Deichselwinkels immer mit einem bestimmten Wert des Lenkwinkels korrespondiert.

Wie oben erläutert, basieren die Kinematikdaten ebenso wie die Fahrspur-Informationen auf einer sensorischen Messung, für welche unterschiedliche Arten von Sensoren eingesetzt werden können. Insbesondere können die Kinematikdaten und/oder die Fahrspur-Informationen basierend auf einer Messung durch wenigstens einen Trägheitssensor, einen Winkelsensor zur Bestimmung eines Deichselwinkels und/oder einen Positionssensor zur Bestimmung einer Relativposition des Zugfahrzeugs zur Landmaschine ermittelt werden.

Ein Trägheitssensor ist dazu eingerichtet, Trägheitsmesswerte zu ermitteln. Diese Trägheitsmesswerte entsprechen wenigstens einer mehrdimensionalen Beschleunigung, was sowohl zweidimensionale als auch dreidimensionale Beschleunigungen einschließt. Abgesehen von einer (translatorischen) Beschleunigung kann ein Trägheitssensor auch eine Winkelbeschleunigung messen, also eine zeitliche Veränderung einer Winkelgeschwindigkeit. Ein oder mehrere Trägheitssensoren können eine Trägheitsmessvorrichtung bilden. Ein Trägheitssensor kann an der Landmaschine, an der Deichsel oder am Zugfahrzeug angeordnet sein. Dabei können selbstverständlich eine Mehrzahl von Trägheitssensoren vorgesehen sein, von denen jeweils wenigstens einer an der Landmaschine und wenigstens einer an der Deichsel und/oder am Zugfahrzeug angeordnet ist. Zumindest in einigen Ausführungsformen kann der Trägheitssensor auch als IMU (inertial measurement unit) bezeichnet werden.

Ein Winkelsensor kann Winkelmesswerte ermitteln, die einem Deichselwinkel entsprechen, also einem Relativwinkel der Deichsel gegenüber einem Fahrzeugkörper der Landmaschine. Es kann alternativ oder zusätzlich auch ein Winkelsensor zur Messung des Relativwinkels zwischen Deichsel und dem Zugfahrzeug eingesetzt werden. Der Begriff "Relativwinkel" schließt hier sowohl eine eindimensionale Winkelmessung ein, bei welcher nur bestimmt wird, wie weit die Deichsel horizontal nach links und rechts schwenkt, als auch eine zweidimensionale Winkelmessung, bei welcher auch gemessen wird, wie weit die Deichsel vertikal aufwärts und abwärts schwenkt. Über die Winkelmesswerte eines Winkelsensors kann die Orientierung der Deichsel relativ zum Zugfahrzeug und/oder zur Landmaschine unter Umständen mit hoher Präzision bestimmt werden. Unter Einbeziehung der geometrischen Abmessungen der Deichsel lässt sich hierdurch beispielsweise ausgehend von Position und Orientierung der Landmaschine die Position eines Gelenkpunktes am Zugfahrzeug bestimmen, ohne dass auf Sensoren am Zugfahrzeug zurückgegriffen werden müsste. Diese Information kann mit anderen Sensordaten kombiniert werden, um Position und/oder Bewegung des Zugfahrzeug insgesamt nachzuvollziehen.

Ein Positionssensor kann Positionsmesswerte ermitteln, die einer Relativposition des Zugfahrzeugs zur Landmaschine entsprechen. Der Positionssensor kann beispielsweise als Ultraschallsensor, Radar-Sensor oder Lidar-Sensor ausgebildet sein. Er kann auch als Kamera ausgebildet sein (die gegebenenfalls auch für Infrarot empfindlich sein kann), wobei mittels Bilderkennung bestimmte Strukturen am Zugfahrzeug identifiziert und über deren Anordnung und scheinbare Größe innerhalb des Kamerabilds die Relativposition erkannt wird. Hierzu müssen selbstverständlich auf Seiten einer entsprechenden Auswertungseinheit Informationen über die Geometrie des Zugfahrzeugs hinterlegt sein. Es können auch unterschiedliche Typen von Positionssensoren miteinander kombiniert werden. Ein Positionssensor kann genutzt werden, eine eventuelle Drift einer Trägheitsmessvorrichtung zu kompensieren. Alternativ oder zusätzlich könnte wenigstens ein Positionssensor auch am Zugfahrzeug angeordnet sein.

Eine weitere Option ist ein Orientierungssensor, der Orientierungsmesswerte ermittelt, die einer Orientierung der Landmaschine und/oder des Zugfahrzeugs gegenüber einer Umgebung derselben entsprechen. Während beispielsweise eine IMU lediglich Informationen über eine Veränderung einer Orientierung liefern kann, kann der Orientierungssensor die Orientierung als solche messen. Es handelt sich dabei um eine Art "absolute" Orientierungsangabe gegenüber der Umgebung. In zwei Dimensionen entspricht die Orientierungsangabe beispielsweise einer Himmelsrichtung. Eine derartige Orientierung kann beispielsweise mittels eines Kreiselkompasses bestimmt werden, was eine prinzipiell zuverlässige, allerdings kostenintensive Lösung darstellt. Kostengünstiger, wenngleich unter Umständen störungsanfällig, wäre ein Magnetometer, welches das Erdmagnetfeld zur Messung der Orientierung nutzt.

Die Trägheitsmessvorrichtungen erlauben keine unmittelbare Positionsmessung und auch keine unmittelbare Messung einer zurückgelegten Wegstrecke. Diese Informationen können nur durch zweimalige (numerische) Integration der Beschleunigungen ermittelt werden, was im Allgemeinen zu numerischen Fehlern führen kann, die im zeitlichen Verlauf zunehmen. Dieser Nachteil kann dadurch kompensiert werden, dass ein Zusatzsensor als Wegstreckensensor ausgebildet ist, der Wegstreckenmesswerte ermittelt, die einer zurückgelegten Wegstrecke der Landmaschine und/oder des Zugfahrzeugs entsprechen. Der Wegstreckensensor kann auch als Odometer bezeichnet werden und die Wegstreckenmesswerte können als Odometriedaten bezeichnet werden. Hierbei wird normalerweise die Anzahl der Umdrehungen eines Rades gemessen und mit dessen bekanntem Abrollumfang multipliziert, um die zurückgelegte Wegstrecke zu bestimmen. Ein solcher Wegstreckensensor kann an der Landmaschine und/oder am Zugfahrzeug angeordnet sein.

Eine bevorzugte Ausführungsform sieht vor, dass der Lenkmodus in Abhängigkeit von Geometriedaten festgelegt wird, welche eine Geometrie des Zugfahrzeugs, der Deichsel und/oder der Landmaschine beschreiben. Derartige Geometriedaten können zum Beispiel einer Länge des Zugfahrzeug, der Deichsel und/oder der Landmaschine entsprechen oder einem Achsabstand, einer Fahrzeugbreite, einer Spurbreite oder anderer Charakteristika. Auch kann es sich um eine Information zur Relativposition bestimmter Komponenten eines Fahrzeugs handeln, zum Beispiel die Relativposition zweier Sensoren zueinander. Die Geometriedaten können mehr oder weniger komplex sein. Beispielsweise könnte ein Fahrzeug lediglich durch Länge, Breite und gegebenenfalls Höhe charakterisiert sein, es könnte aber auch ein detailliertes dreidimensionales Modell hinterlegt sein, mit einer Mehrzahl an charakteristischen Punkten des Fahrzeugs, ähnlich einer Polygonnäherung. Die Geometriedaten können in der Steuereinheit hinterlegt sein, die die entsprechenden Berechnungen durchführt, oder aus einer externen Quelle an die Steuereinheit übermittelt werden. Zum Beispiel kann aus dem Deichselwinkel der Deichsel auf die Position einer Kupplung am Zugfahrzeug geschlossen werden, wenn die Länge der Deichsel und ihre Anbindung an die Landmaschine bekannt sind. Es ist möglich, dass Deichseln unterschiedlicher Länge in Kombination mit ein und derselben Landmaschine eingesetzt werden, oder dass eine Deichsel mit verstellbarer Länge eingesetzt wird. Auch könnten Zugfahrzeuge mit unterschiedlicher Geometrie mit einer Landmaschine kombiniert werden, was relevant sein könnte, um zum Beispiel bei Kurvenfahrten eine Kollision zwischen Zugfahrzeug und Landmaschine zu verhindern. Bevorzugt werden die Geometriedaten wenigstens teilweise automatisch angepasst. Dies könnte zum Beispiel durch eine drahtgebundene oder drahtlose Kommunikation zwischen Zugfahrzeug und/oder Deichsel einerseits und Landmaschine andererseits erreicht werden, wodurch Zugfahrzeug und/oder Deichsel identifiziert werden oder zumindest Geometriedaten zugänglich gemacht werden. Insbesondere ist es bevorzugt, dass sich ändernde Geometriedaten einer verstellbaren Deichsel angepasst werden. Das heißt wenn sich die Abmessungen der Deichsel ändern, werden auch die Geometriedaten geändert.

Allgemein kann die Anpassung der Geometriedaten automatisch und/oder entsprechend einer Benutzereingabe erfolgen. In letzterem Fall könnte vorgesehen sein, dass der Benutzer tatsächlich Zahlenwerte eingibt, die geometrische Abmessungen charakterisieren. Zur besseren Benutzerfreundlichkeit kann auch vorgesehen sein, dass der Benutzer eine einfache Eingabe tätigt, die zum Beispiel ein bestimmtes Modell identifiziert, dessen Geometriedaten in einer Datenbank hinterlegt sind und dann für die Anpassung genutzt werden. Bei einer automatischen Anpassung könnten Geometriedaten durch sensorische Messung ermittelt werden, was aber unter Umständen aufwändig oder auch unzuverlässig sein kann. Vorteilhaft ist dagegen eine automatische Erkennung eines bestimmten Modells, dessen Geometriedaten hinterlegt sind, oder eine oben beschriebene Übermittlung von Geometriedaten.

Gemäß einer Ausgestaltung weist die Landmaschine einen Fahrzeugkörper auf, an welchen wenigstens ein Anbaugerät ankoppelbar ist, wobei Geometriedaten der Landmaschine in Abhängigkeit von wenigstens einem an den Fahrzeugkörper angekoppelten Anbaugerät angepasst werden und der Lenkmodus entsprechend festgelegt wird.

Das Anbaugerät kann für unterschiedliche Arten der Feldbearbeitung ausgelegt sein. Es kann zum Beispiel mit einem Hubwerk der Landmaschine verbunden werden. Neben einer mechanischen Verbindung kann auch eine energieübertragende Verbindung hergestellt werden, zum Beispiel eine elektrische, hydraulische oder pneumatische Verbindung. Auch kann eine drahtlose oder drahtgebundene Datenverbindung zwischen dem Fahrzeugkörper und dem Anbaugerät hergestellt werden. Bei der vorliegenden Ausgestaltung werden die Geometriedaten werden in Abhängigkeit davon angepasst, ob ein Anbaugerät an den Fahrzeugkörper angekoppelt ist und/oder welches Anbaugerät angekoppelt ist. Es liegt auf der Hand, dass die Gesamtabmessungen der Landmaschine wesentlich davon abhängen, ob ein Anbaugerät angekoppelt ist, sowie von dessen Abmessungen. Dies hat wiederum Einfluss darauf, welche Lenkmanöver die Landmaschine problemlos oder gefahrlos ausführen kann. U.U. kann auch eine aktuelle Position des Anbaugeräts berücksichtigt werden, sofern mehrere Positionen möglich sind, die zu maßgeblich unterschiedlichen Gesamtabmessungen der Landmaschine führen.

Sofern das Anbaugerät auf derjenigen Seite der Landmaschine angebaut wird, an welcher diese über die Deichsel mit dem Zugfahrzeug verbunden ist, kann auch eine Längeneinstellung der Deichsel in Abhängigkeit vom Anbaugerät vorgenommen werden. Wenn ein Anbaugerät angekoppelt ist, muss eine größere Deichsellänge gewählt werden als ohne Anbaugerät. Das heißt auch die Geometriedaten der Deichsel können optional in Abhängigkeit von wenigstens einem an den Fahrzeugkörper angekoppelten Anbaugerät angepasst werden.

Besonders bevorzugt werden bei Identifizierung eines Anbaugeräts die Geometriedaten der Landmaschine automatisch angepasst. Das heißt es wird ein Anbaugerät identifiziert und daraufhin werden die Geometriedaten automatisch angepasst, also ohne weitere Benutzereingabe. Die Identifikation selbst kann hingegen durch Benutzereingabe erfolgen. Das heißt der Benutzer könnte durch Eingabe festlegen, dass ein bestimmtes Anbaugerät angekoppelt ist, ohne dessen Geometriedaten kennen oder festlegen zu müssen. Es ist aber auch denkbar, dass die Identifikation automatisch erfolgt, beispielsweise durch drahtlose oder drahtgebundene Kommunikation zwischen dem Anbaugerät und der oben genannten Steuereinheit, welche in den Fahrzeugkörper der Landmaschine integriert sein kann. Eine derartige automatische Identifikation mit automatischer Anpassung der Geometriedaten ermöglicht entsprechend einem Plugand-Play-Prinzip eine besonders benutzerfreundliche Anwendung, die menschliche Fehler weitgehend ausschließt. Wie oben erläutert, können zusammen mit den Geometriedaten der Landmaschine die Geometriedaten der Deichsel angepasst werden, was in dieser Ausführungsform ebenfalls automatisch erfolgen kann.

Gemäß einer Ausgestaltung wird in wenigstens einem Lenkmodus anhand der Fahrspur-Informationen und von Geometriedaten des Zugfahrzeugs ein Bewegungsbereich des Zugfahrzeugs ermittelt und die Lenkkommandos werden in Abhängigkeit vom Bewegungsbereich und den Geometriedaten der Landmaschine ermittelt. Der Bewegungsbereich ist ein zwei- oder dreidimensionaler Bereich, durch den sich das Zugfahrzeug entlang der Zugfahrzeug-Fahrspur bewegt. Bei einer zweidimensionalen Betrachtung wird vernachlässigt, dass das Zugfahrzeug höhenabhängig unterschiedliche horizontale Abmessungen aufweisen kann. Gleiches gilt für die Landmaschine. Für viele Anwendungen ist eine zweidimensionale Betrachtung ausreichend. Der Bewegungsbereich wird vom Zugfahrzeug gewissermaßen durchquert und man kann davon ausgehen, dass dieser Bereich auch von der Landmaschine gefahrlos durchquert werden kann. Dies wird bei der vorliegenden Ausführungsform genutzt, um in Kombination mit den Geometriedaten der Landmaschine eine geeignete Soll-Fahrroute festzulegen.

Eine bereits oben erwähnte Option besteht darin, dass in wenigstens einem Lenkmodus die Soll-Fahrroute der Berechnungs-Fahrroute entspricht, so dass die Landmaschine idealerweise der Fahrroute des Zugfahrzeugs exakt folgt. Ein solcher Lenkmodus könnte allerdings insbesondere bei einer in Längs- oder Querrichtung ausladenden Landmaschine zu Problemen führen. Bei einer Kurvenfahrt könnte die Landmaschine mit feststehenden Objekten, zum Beispiel einem Torbogen, einem Verkehrsschild, einer Hausecke etc., kollidieren, wenn sie exakt der Fahrroute des Zugfahrzeugs folgt. Daher ist in einer Weiterbildung des Verfahrens vorgesehen, dass in wenigstens einem Lenkmodus ein Bewegungsbereich der Landmaschine wenigstens einseitig durch den Bewegungsbereich des Zugfahrzeugs begrenzt ist. "Einseitig" bedeutet dabei entweder linksseitig oder rechtsseitig bezüglich einer Querachse der Landmaschine. Da die Begrenzung insbesondere bei einer Kurvenfahrt relevant ist, kann man auch von einer kurveninneren oder kurvenäußeren Begrenzung sprechen. In einigen Fällen lässt sich eine beidseitige Begrenzung realisieren. In anderen Fällen ist lediglich eine einseitige Begrenzung möglich. Der Bewegungsbereich der Landmaschine ist einseitig (zum Beispiel links oder kurveninnenseitig) durch den Bewegungsbereich des Zugfahrzeugs begrenzt. Das heißt es wird mithilfe der Berechnungs-Fahrroute der Bewegungsbereich des Zugfahrzeugs ermittelt, und dann wird die Soll-Fahrroute so ermittelt, dass der Bewegungsbereich der Landmaschine einseitig nicht über den Bewegungsbereich des Zugfahrzeugs hinausragt. Befindet sich zum Beispiel im Falle einer Kurvenfahrt kurveninnenseitig ein feststehendes Objekt, kann durch den entsprechenden Lenkmodus sichergestellt werden, dass die Landmaschine das Objekt kollisionsfrei passiert, sofern das Zugfahrzeug dies getan hat.

Eine Ausführungsform sieht vor, dass in Abhängigkeit vom Lenkmodus wenigstens eine lenkbare Achse arretiert wird. Das heißt in wenigstens einem Lenkmodus ist die lenkbare Achse arretiert, typischerweise in einer Mittelstellung oder Neutralstellung, während sie in wenigstens einem anderen Lenkmodus zur Lenkung freigegeben ist. Das heißt in dem entsprechenden Lenkmodus wird die Achse nach Bedarf nach rechts oder links ausgelenkt.

Eine Möglichkeit besteht darin, dass der Lenkmodus in Abhängigkeit von einem Betrag einer Fahrgeschwindigkeit und/oder vom Vorliegen einer Rückwärtsfahrt festgelegt wird. Beides kann auf eine Benutzereingabe hin erfolgen. Bevorzugt erfolgt es automatisch. Die Fahrgeschwindigkeit kann dabei eine Fahrgeschwindigkeit des Zugfahrzeugs und/oder der Landmaschine selbst sein, wobei der Unterschied aufgrund der Kopplung in der Regel vernachlässigbar ist. Im Allgemeinen ist eine stärkere und/oder empfindlichere Lenkung der Landmaschine bei niedrigen Fahrgeschwindigkeiten vorteilhaft, während bei höheren Fahrgeschwindigkeiten eine weniger empfindliche Lenkung zur Stabilisierung beiträgt. Aus diesen oder anderen Gründen kann es sinnvoll sein, bei höheren Geschwindigkeiten einen anderen Lenkmodus festzulegen. Insbesondere kann in Abhängigkeit von der Fahrgeschwindigkeit wenigstens eine lenkbare Achse arretiert werden. Oberhalb einer definierten Grenzgeschwindigkeit kann in einen Lenkmodus gewechselt werden, bei dem die entsprechende Achse (zum Beispiel die Hinterachse) arretiert wird, wodurch die Landmaschine und das Gespann insgesamt stabilisiert werden können. Es können auch mehrere Geschwindigkeitsbereiche unterschieden werden, zum Beispiel ein niedriger, ein mittlerer und ein hoher Geschwindigkeitsbereich. Auch eine Festlegung in Abhängigkeit vom Vorliegen einer Rückwärtsfahrt kann vorteilhaft sein. Dies kann sich auf eine Rückwärtsfahrt des Zugfahrzeugs und/oder der Landmaschine beziehen, welche wiederum aufgrund der Kopplung nahezu immer gleichzeitig vorliegen. Es wird bei dieser Ausführungsform bei einer Rückwärtsfahrt ein anderer Lenkmodus festgelegt als bei einer Vorwärtsfahrt. Es sind unterschiedliche Strategien denkbar, wobei es insbesondere vorteilhaft sein kann, bei einer Rückwärtsfahrt eine lenkbare Achse zu arretieren, während diese bei Vorwärtsfahrt für die Lenkung freigegeben wird.

Die Aufgabe wird weiterhin gelöst mit einer Landmaschine, welche dazu eingerichtet ist, während einer Straßenfahrt an ein Zugfahrzeug angehängt zu sein, welches entlang einer Zugfahrzeug-Fahrspur fährt, und welche eine Steuervorrichtung aufweist, die dazu eingerichtet ist:
- ausgehend von einer Mehrzahl von möglichen Lenkmodi der Landmaschine, eine Festlegung eines Lenkmodus für wenigstens einen Teil der Straßenfahrt zu ermöglichen,
- basierend auf sensorischer Messung Kinematikdaten zu ermitteln, die eine Kinematik der Landmaschine beschreiben,
- basierend auf sensorischer Messung Fahrspur-Informationen betreffend das Zugfahrzeug zu ermitteln und die Kinematikdaten hiermit abzugleichen,
- in Abhängigkeit vom Ergebnis des Abgleichs sowie in Abhängigkeit vom aktuell festgelegten Lenkmodus automatisch Lenkkommandos für wenigstens eine lenkbare Achse der Landmaschine zu ermitteln, um die Landmaschine angepasst an die Zugfahrzeug-Fahrspur zu lenken, und
- die Landmaschine automatisch durch die Lenkkommandos zu lenken.

Die genannten Begriffe wurden bereits oben mit Bezug auf das erfindungsgemäße Lenkverfahren erläutert und werden daher nicht nochmals erklärt. Vorteilhafte Ausgestaltungen der erfindungsgemäßen Landmaschine entsprechen denen des erfindungsgemäßen Lenkverfahrens.

Die Steuervorrichtung weist normalerweise eine Mehrzahl von Komponenten auf, die räumlich getrennt voneinander angeordnet sein können. Insbesondere kann sie wenigstens einen Sensor zum Durchführen der sensorischen Messung aufweisen, sowie eine Steuereinheit, die von dem Sensor räumlich getrennt sein kann. Die Steuereinheit kann dazu eingerichtet sein, die Festlegung des Lenkmodus zu ermöglichen, die Kinematikdaten zu ermitteln, die Fahrspur-Informationen zu ermitteln und/oder die Lenckommandos zu ermitteln. Auch wenigstens ein Lenkaktor zum Lenken wenigstens einer Achse kann als Teil der Steuervorrichtung angesehen werden.

Die Aufgabe wird außerdem gelöst durch ein Gespann mit einem Zugfahrzeug und einer Landmaschine, welche während einer Straßenfahrt an das Zugfahrzeug angehängt ist, welches entlang einer Zugfahrzeug-Fahrspur fährt, wobei das Gespann eine Steuervorrichtung aufweist, die dazu eingerichtet ist:
- ausgehend von einer Mehrzahl von möglichen Lenkmodi der Landmaschine, eine Festlegung eines Lenkmodus für wenigstens einen Teil der Straßenfahrt zu ermöglichen,
- basierend auf sensorischer Messung Kinematikdaten zu ermitteln, die eine Kinematik der Landmaschine beschreiben,
- basierend auf sensorischer Messung Fahrspur-Informationen betreffend das Zugfahrzeug zu ermitteln und die Kinematikdaten hiermit abzugleichen,
- in Abhängigkeit vom Ergebnis des Abgleichs sowie in Abhängigkeit vom aktuell festgelegten Lenkmodus automatisch Lenkkommandos für wenigstens eine lenkbare Achse der Landmaschine zu ermitteln, um die Landmaschine angepasst an die Zugfahrzeug-Fahrspur zu lenken, und
- die Landmaschine automatisch durch die Lenkkommandos zu lenken.

Die genannten Begriffe wurden bereits oben mit Bezug auf das erfindungsgemäße Lenkverfahren erläutert und werden daher nicht nochmals erklärt. Vorteilhafte Ausgestaltungen des erfindungsgemäßen Gespanns entsprechen denen des erfindungsgemäßen Lenkverfahrens.

Wiederum weist die Steuervorrichtung normalerweise eine Mehrzahl von Komponenten auf, die räumlich getrennt voneinander angeordnet sein können. Hierzu können, wie oben beschrieben, wenigstens einen Sensor, eine Steuereinheit sowie wenigstens ein Aktor gehören. Die Steuervorrichtung ist bevorzugt wenigstens teilweise an der Landmaschine angeordnet und kann insbesondere ausschließlich an der Landmaschine angeordnet sein. Sie kann aber auch teilweise am Zugfahrzeug und/oder - soweit vorhanden - an der Deichsel angeordnet sein. In einem solchen Fall können Teile der Steuervorrichtung drahtlos oder drahtgebunden miteinander kommunizieren.

Die Aufgabe wird auch gelöst durch eine Steuervorrichtung zum Steuern einer Landmaschine, welche während einer Straßenfahrt an ein Zugfahrzeug angehängt ist, welches entlang einer Zugfahrzeug-Fahrspur fährt, wobei Steuervorrichtung dazu eingerichtet ist:
- ausgehend von einer Mehrzahl von möglichen Lenkmodi der Landmaschine, eine Festlegung eines Lenkmodus für wenigstens einen Teil der Straßenfahrt zu ermöglichen,
- basierend auf sensorischer Messung Kinematikdaten zu ermitteln, die eine Kinematik der Landmaschine beschreiben,
- basierend auf sensorischer Messung Fahrspur-Informationen betreffend das Zugfahrzeug zu ermitteln und die Kinematikdaten hiermit abzugleichen,
- in Abhängigkeit vom Ergebnis des Abgleichs sowie in Abhängigkeit vom aktuell festgelegten Lenkmodus automatisch Lenkkommandos für wenigstens eine lenkbare Achse der Landmaschine zu ermitteln, um die Landmaschine angepasst an die Zugfahrzeug-Fahrspur zu lenken, und
- die Landmaschine automatisch durch die Lenkkommandos zu lenken.

Die genannten Begriffe wurden bereits oben mit Bezug auf das erfindungsgemäße Lenkverfahren erläutert und werden daher nicht nochmals erklärt. Vorteilhafte Ausgestaltungen der erfindungsgemäßen Steuervorrichtung entsprechen denen des erfindungsgemäßen Lenkverfahrens. Mögliche Komponenten der Steuervorrichtung sowie deren Anordnung wurden mit Bezug auf die erfindungsgemäße Landmaschine sowie das erfindungsgemäße Gespann erläutert.

Im Folgenden wird die Erfindung anhand von Figuren beschrieben. Die Figuren sind lediglich beispielhaft und schränken den allgemeinen Erfindungsgedanken nicht ein. Es zeigen
- Fig. 1: eine Draufsicht einer Straßenkreuzung sowie eines erfindungsgemäßen Gespanns aus einem Zugfahrzeugs und einer Landmaschine mit einer erfindungsgemäßen Steuervorrichtung;
- Fig. 2: ein Blockdiagramm von Komponenten der Steuervorrichtung sowie zwischen diesen übertragenen Informationen;
- Fig. 3: eine Draufsicht der Straßenkreuzung mit verschiedenen Fahrspuren;
- Fig. 4: eine Draufsicht einer Straße mit dem Gespann sowie einer Fahrspur und zwei Bewegungsbereichen; sowie
- Fig. 5: ein Flussdiagramm eines erfindungsgemäßen Lenkverfahrens zum Lenken der Landmaschine aus Fig. 1.

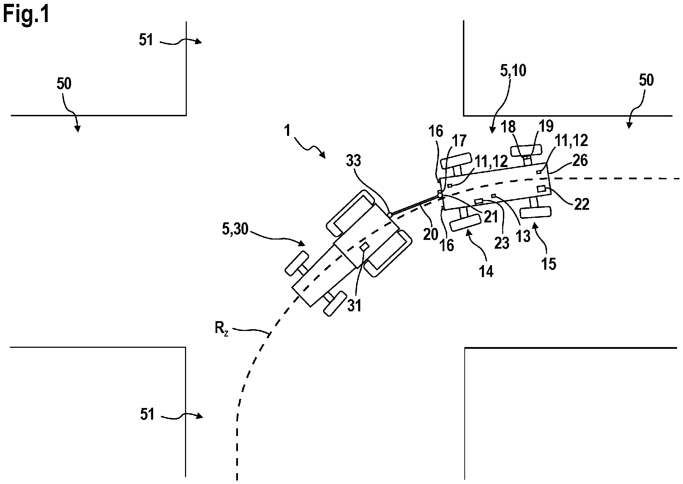

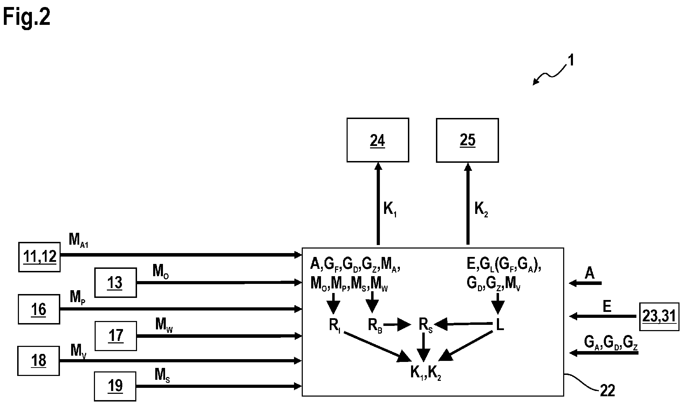

Fig. 1 zeigt eine Draufsicht einer Straßenkreuzung mit einer ersten Straße 50 sowie einer zweiten Straße 51. Ein Gespann 5 aus einem Zugfahrzeug 30 sowie einer hieran über eine Deichsel 20 angekoppelten Landmaschine 10 ist dabei, von der ersten Straße 50 in die zweite Straße 51 abzubiegen. Dabei fährt das Zugfahrzeug 30, welches in diesem Beispiel als Traktor dargestellt ist, entlang einer Zugfahrzeug-Fahrtroute Rz, die in Fig.1, 3 und 5 als lang gestrichelte Linie dargestellt ist. Die Landmaschine 10 verfügt über eine Vorderachse 14 sowie eine Hinterachse 15, die jeweils aktiv lenkbar sind mittels eines vorderen Lenkaktors 24 sowie eines hinteren Lenkaktors 25 (dargestellt im Blockdiagramm in Fig. 2). Die Achsen 14, 15 sind an einem Fahrzeugkörper 26 angeordnet. An diesen können optional verschiedene Anbaugeräte 27 angekoppelt werden. Die Deichsel 20 ist in einem vorderen Gelenkpunkt 33 schwenkbar mit dem Zugfahrzeug 30 verbunden und in einem hinteren Gelenkpunkt 21 schwenkbar mit der Landmaschine 10 verbunden. In den genannten Gelenkpunkten 21, 33 ist sie schwenkbar. Sie überträgt wenigstens Zug- und Druckkräfte parallel zu ihrer Verlaufsrichtung. Es werden seitens des Zugfahrzeugs 30 keinerlei Lenkkommandos an die Landmaschine 10 übertragen.

Um die Achsen 14, 15 der Landmaschine 10 derart lenken zu können, dass sie sich in vorgesehener Weise an die Bewegungen des Zugfahrzeugs 30 anpasst, ist eine Steuervorrichtung 1 vorgesehen, deren Komponenten im Blockdiagramm in Fig. 2 gemeinsam dargestellt sind. Zur Steuervorrichtung 1 gehören eine Steuereinheit 22, die an der Landmaschine 10 angeordnet ist sowie eine Trägheitsmessvorrichtung 11, die in diesem Fall zwei zueinander beabstandete Trägheitssensoren 12 aufweist. Die Trägheitssensoren 12 übertragen an die Steuereinheit 22 Trägheitsmesswerte Ma, die einer mehrdimensionalen Beschleunigung und einer mehrdimensionalen Winkelbeschleunigung entsprechen. Die von den beiden Trägheitssensoren 12 empfangenen Trägheitsmesswerte Ma, sind im Prinzip zueinander redundant, was genutzt wird, um einen Abgleich durchzuführen und mögliche Messfehler zu korrigieren.

Optional kann die Landmaschine 10 weitere Sensoren 13, 16-19 aufweisen. Beispielsweise kann ein Orientierungssensor 13, der als Magnetometer ausgebildet sein kann, dazu genutzt werden, Orientierungsmesswerte Mo zu ermitteln, die einer Orientierung, also räumlichen Ausrichtung, der Landmaschine 10 entsprechen. Positionssensoren 16 können Positionsmesswerte M_{P} ermitteln, die einer Relativposition des Zugfahrzeug 30 zur Landmaschine 10 entsprechen. Diese Positionssensoren 16 könnten beispielsweise als Radar- oder Lidar-Sensoren ausgebildet sein. Schließlich kann ein Wegstreckensensor 19, der auch als Odometer bezeichnet werden kann, Wegstreckenmesswerte Ms ermitteln, die einer zurückgelegten Wegstrecke der Landmaschine 10 entsprechen. Des Weiteren ist ein Geschwindigkeitssensor 18 vorgesehen, der über eine Drehzahl eines Rades der Hinterachse 15 Richtung und Betrag einer Geschwindigkeit der Landmaschine 10 messen kann. Schließlich ist am hinteren Gelenkpunkt 21 ein Winkelsensor 17 angeordnet. Dieser ermittelt Winkelmesswerte Mw, die einem Deichselwinkel der Deichsel 20 gegenüber der Landmaschine 10 entsprechen. Auch die Winkelmesswerte Mw können drahtlos oder drahtgebunden an die Steuereinheit 22 übertragen werden. Fig. 1 und 2 zeigen eine Vielzahl an Sensoren, die normalerweise nicht alle gemeinsam zum Einsatz kommen. Allerdings kann eine Mehrzahl unterschiedlicher Typen von Sensoren dazu dienen, die Präzision der Steuervorrichtung 1 zu verbessern.

Die Landmaschine 10 weist eine erste Benutzerschnittstelle 23 auf und das Zugfahrzeug 30 weist eine zweite Benutzerschnittstelle 31 auf. Über jede der Benutzerschnittstellen 23, 31 kann eine Benutzereingabe E getätigt werden. Beide Benutzerschnittstellen 23, 31 sind drahtlos oder drahtgebunden mit der Steuereinheit 22 verbunden.

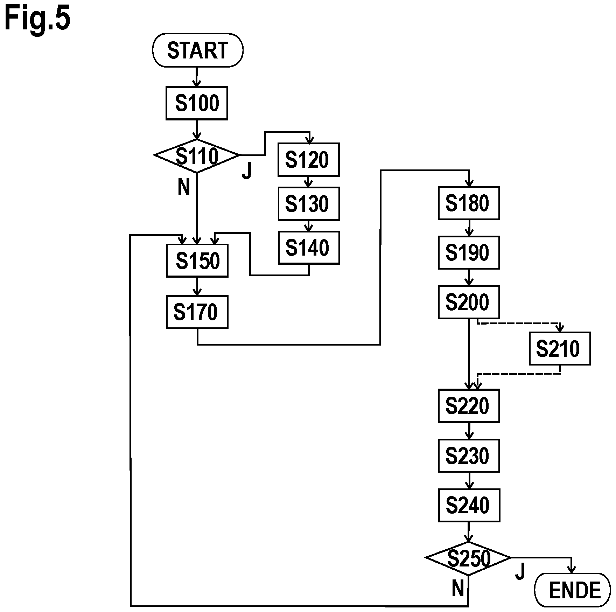

Die Steuervorrichtung 1 führt ein erfindungsgemäßes Lenkverfahren durch, das nun mit Bezug auf das Flussdiagramm in Fig. 5 sowie ergänzend mit Bezug auf Fig. 2, 3 und 4 erläutert wird. In einem ersten Schritt S100 erfolgt eine Initialisierung der Steuereinheit 22, bei welcher Fahrzeugkörper-Geometriedaten G_{F} des Fahrzeugkörpers 26 der Landmaschine 10, Zugfahrzeug-Geometriedaten Gz des Zugfahrzeug 30 und Deichsel-Geometriedaten G_{D} der Deichsel 20 geladen werden. Dabei können die Zugfahrzeug-Geometriedaten Gz seitens des Zugfahrzeugs 30 übertragen werden oder nach Identifizierung des Zugfahrzeugs 30 aus einer Datenbank geladen werden, auf welche die Steuereinheit 22 Zugriff hat. Die Fahrzeugkörper-Geometriedaten G_{F} werden zunächst genutzt, um Landmaschinen-Geometriedaten G_{L} der Landmaschine 10 festzulegen.

Die Geometriedaten G_{D}, G_{F}, G_{L}, Gz können unterschiedliche Aspekte der Geometrie beschreiben, beispielsweise Länge, Breite, Achsabstand, Spurbreite, Anordnung der

Gelenkpunkte 21, 33 etc. Außerdem werden Anfangswerte A bestimmt, insbesondere die anfängliche Position und Orientierung der Landmaschine 10, ihre Geschwindigkeit und Winkelgeschwindigkeit. Letztere sind normalerweise gleich Null, da die Initialisierung typischerweise im Stillstand erfolgt. Die anfängliche Position der Landmaschine 10 kann beispielsweise als Koordinatenursprung gewählt werden oder mit einem anderen Standardwert initialisiert werden, ebenso kann ihrer Orientierung mit einem Winkel von 0° oder einem anderen Standardwert initialisiert werden. Es wäre allerdings auch möglich, die Orientierung über den Orientierungssensor 13 zu bestimmen. Die Ausrichtung der Deichsel 20 kann mittels des Winkelsensors 21 ermittelt werden. Die Position der Zugmaschine 30 kann zumindest hinsichtlich des vorderen Gelenkpunkts 33 mittels des Winkelsensors 17 in Kombination mit den Geometriedaten der Deichsel 20 bestimmt werden. Alternativ oder zur Verbesserung der Genauigkeit könnten auch die Positionssensoren 16 genutzt werden, welche gegebenenfalls auch eine unmittelbare Bestimmung der Orientierung des Zugfahrzeugs 30 erlauben.

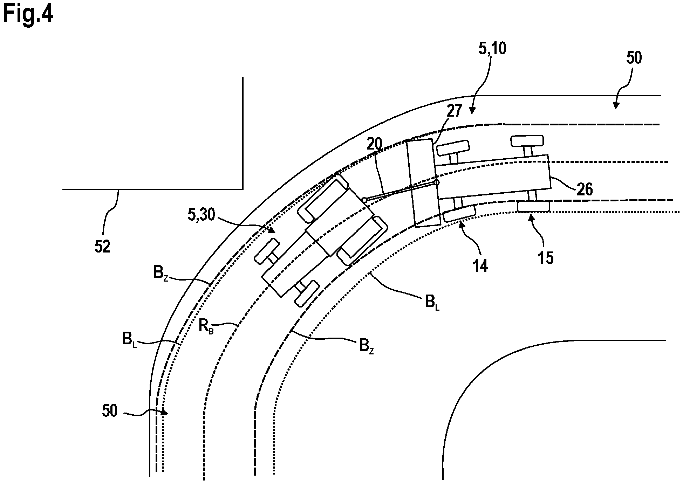

Danach wird im Schritt S110 überprüft, ob ein Anbaugerät 27 an den Fahrzeugkörper 26 angekoppelt ist, wie schematisch in Fig.4 dargestellt. Falls ja, wird in Schritt S120 der Typ des Anbaugeräts 27 identifiziert und in Schritt S130 automatisch Anbaugerät-Geometriedaten G_{A} geladen. Die Identifikation kann durch drahtlose oder drahtgebundene Kommunikation zwischen dem Anbaugerät 27 und der Steuereinheit 22 erfolgen, wobei auch die Anbaugerät-Geometriedaten G_{A} übertragen werden können. In Schritt S140 werden die Landmaschinen-Geometriedaten G_{L} unter Einbeziehung der Anbaugerät-Geometriedaten G_{A} aktualisiert. Sofern die Landmaschine 10 eine Mehrzahl von Ankopplungspositionen (zum Beispiel Hubwerke) für Anbaugeräte 27 aufweist, können in den Schritten S120 bis S140 mehrere Anbaugeräte 27 berücksichtigt werden. Falls kein Anbaugerät 27 angekoppelt ist, werden die genannten Schritte übersprungen.

In Schritt S150 wird mittels des Geschwindigkeitssensors 18 der Betrag der Geschwindigkeit ermittelt und es wird anhand des Vorzeichens der Geschwindigkeit festgestellt, ob eine Rückwärtsfahrt vorliegt. In Schritt S160 wird abgefragt, ob eine Benutzereingabe E über eine der Benutzerschnittstellen 23, 31 erfolgt ist, welche Einfluss auf den Lenkmodus L hat.

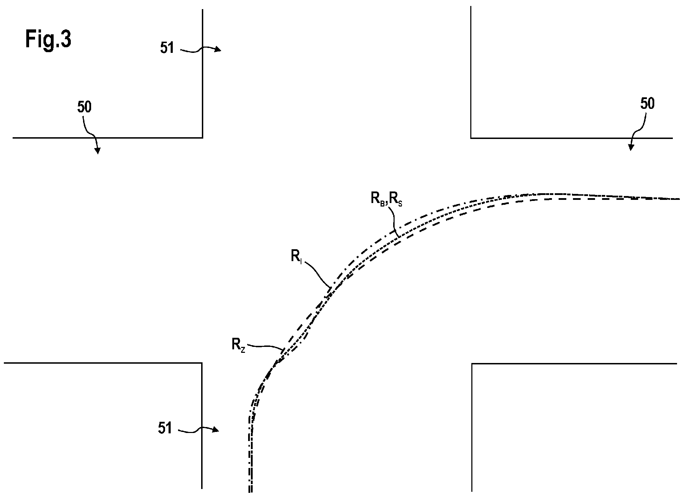

In Schritt S170 erfolgt eine Festlegung des Lenkmodus L. Diese kann wenigstens teilweise auf der Benutzereingabe E basieren. Beispielsweise kann der Benutzer einen Lenkmodus auswählen, in welchem die Landmaschine 10 möglichst exakt der Zugfahrzeug-Fahrspur Rz des Zugfahrzeugs 30 folgt, was nachfolgend noch anhand von Fig. 3 erläutert wird. Alternativ kann der Benutzer einen Lenkmodus auswählen, in welchem ein Zugfahrzeug-Bewegungsbereich BZ, durch welchen sich das Zugfahrzeug 30 bewegt, eine einseitige Begrenzung eines Landmaschinen-Bewegungsbereichs BL darstellt, was nachfolgend anhand von Fig. 4 erläutert wird. Er könnte auch manuell auswählen, dass eine der Achsen 14, 15 arretiert bleiben soll, oder aber, dass beide Achsen 14, 15 gelenkt werden. Eine weitere Möglichkeit bestünde darin, auszuwählen, dass die Vorderachse 14 durch die Deichsel 20 zwangsgelenkt sein soll oder aber unabhängig von dieser lenkbar sein soll. Alternativ oder zusätzlich zu einer manuellen Festlegung kann der Lenkmodus L automatisch festgelegt werden. Ein mögliches Kriterium für eine automatische Festlegung wäre beispielsweise das Überschreiten eines Grenzwerts der Fahrgeschwindigkeit. Unterhalb dieses Grenzwerts könnten für eine bessere Manövrierfähigkeit beide Achsen 14, 15 gelenkt werden, während oberhalb des Grenzwerts die Hinterachse 15 arretiert wird, um die Landmaschine zu stabilisieren. Auch bei Vorliegen einer Rückwärtsfahrt könnte die Hinterachse 15 automatisch arretiert werden. Zudem kann der Lenkmodus L, der auch durch einen oder mehrere Lenkparameter beschrieben werden kann, von den Zugfahrzeug-Geometriedaten Gz des Zugfahrzeug 30, den Deichsel-Geometriedaten G_{D} der Deichsel 20 sowie den Landmaschinen-Geometriedaten G_{L} der Landmaschine 10 abhängen, wie in Fig.2 angedeutet ist. All diese Geometriedaten können beeinflussen, wie die Landmaschine 10 zu lenken ist. Insbesondere kann der Lenkmodus L vom Vorhandensein eines Anbaugeräts 27 und dessen Anbaugerät-Geometriedaten G_{A} abhängen.

Nach Festlegung des Lenkmodus L werden in Schritt S180 mittels verschiedener Sensoren 12, 13, 16, 17, 19 Messwerte M_{A}, Mo, M_{P}, Ms, Mw gemessen und, wie im Blockdiagramm in Fig. 2 dargestellt, an die Steuereinheit 22 gesendet. Diese berechnet in Schritt S190 Kinematikdaten der Landmaschine 10. Insbesondere können durch numerische Integration der anhand der Beschleunigungsmesswerte M_{A} ermittelten Beschleunigung beziehungsweise Winkelbeschleunigung eine aktuelle Geschwindigkeit und Winkelgeschwindigkeit sowie eine aktuelle Position und Orientierung berechnet werden, wobei die Anfangswerte A benötigt werden. Es können auch Wegstreckendaten Ms des Wegstreckensensors 19 einbezogen werden, um den ermittelten Wert für die aktuelle Position zu präzisieren, oder Orientierungsdaten Mo des Orientierungssensors 13, um die Präzision der ermittelten Orientierung zu verbessern. Basierend hierauf wird als Teil der Kinematikdaten eine Ist-Fahrspur R_{I} der Landmaschine 10 berechnet, welche in Fig. 3 als strichpunktierte Linie dargestellt ist.

Des Weiteren werden in einem Schritt S200, der auch vor Schritt S190 oder zeitgleich mit diesem durchgeführt werden könnte, Fahrspur-Informationen betreffend das Zugfahrzeug 30 ermittelt. Hierzu bestehen unterschiedliche Möglichkeiten. Zum Beispiel kann aus einer seitlichen Beschleunigung der Landmaschine 10 auf einer Fahrtrichtungsänderung des Zugfahrzeugs 30 geschlossen werden, sowohl qualitativ als auch quantitativ. Dabei lässt sich die Präzision verbessern, wenn zusätzlich wenigstens der Winkelsensor 17 und/oder die Positionssensoren 16 einbezogen werden, deren Messwerte im Schritt S180 eingelesen werden können. Durch Kombination mit den bekannten Landmaschinen-Geometriedaten G_{L}, Zugfahrzeug-Geometriedaten Gz und Deichsel-Geometriedaten G_{D} lassen sich hieraus Position, Orientierung, Geschwindigkeit und Winkelgeschwindigkeit des Zugfahrzeugs 30 ermitteln. In jedem Fall lässt sich eine Berechnungs-Fahrspur R_{B} ermitteln, die in Fig. 3 als kurz gestrichelte Linie dargestellt ist. Aufgrund von verschiedenen Einflüssen wie Messfehlern und numerischen Fehlern weicht die Berechnungs-Fahrspur R_{B} teilweise von der tatsächlichen Zugfahrzeug-Fahrspur R_{F} ab. Die Abweichung ist allerdings geringfügig und beeinträchtigt die grundsätzliche Funktion der Steuervorrichtung 1 nicht. Insbesondere bei einer Rückwärtsfahrt kann die Berechnungs-Fahrspur R_{B} auch für die Zukunft extrapoliert werden.

Basierend auf der Berechnungs-Fahrspur R_{B} sowie basierend auf dem aktuell festgelegten Lenkmodus L wird in Schritt S220 eine Soll-Fahrspur Rs für die Landmaschine 10 ermittelt. Diese ist in dem in Fig.3 gezeigten Beispiel mit der Berechnungs-Fahrspur R_{B} identisch, d. h. es ist vorgesehen, dass die Landmaschine 10 exakt in der Spur des Zugfahrzeug 30 folgt. Alternativ wäre auch denkbar, dass die Soll-Fahrspur so ermittelt wird, dass ein Landmaschinen-Bewegungsbereich B_{L} einseitig durch den Zugfahrzeug-Bewegungsbereich Bz begrenzt ist. In dem in Fig.4 gezeigten Beispiel ist eine in Fahrtrichtung rechtsseitige Begrenzung vorgesehen, so dass der durch eine punktierte Linie dargestellte Landmaschinen-Bewegungsbereich B_{L} kurvenaußenseitig durch den durch eine gestrichelte Linie dargestellten Zugfahrzeug-Bewegungsbereich Bz begrenzt ist. Hierdurch wird bei einer Fahrt um eine Kurve der Straße 50 sichergestellt, dass die Landmaschine 10 nicht mit einem dicht an der Straße 50 stehenden Haus 52 kollidiert. In einem solchen Fall, welcher einem eigenen Lenkmodus L entspricht, wird in einem Schritt S210 zunächst basierend auf der Berechnungs-Fahrspur R_{B} und den Zugfahrzeug-Geometriedaten Gz der Zugfahrzeug-Bewegungsbereich Bz ermittelt. Außerdem wird basierend auf den Landmaschinen-Geometriedaten G_{L} die Soll-Fahrspur Rs so ermittelt, dass der Landmaschinen-Bewegungsbereich B_{L} wie beschrieben begrenzt ist. Es versteht sich, dass die (auf Gründen der Übersichtlichkeit in Fig.4 weggelassene) Soll-Fahrspur Rs hierdurch nicht mehr mit der Berechnungs-Fahrspur R_{B} übereinstimmt.

In einem weiteren Schritt S220 wird die Soll-Fahrspur Rs mit der Ist-Fahrspur R_{I} abgeglichen. In Schritt S230 werden in Abhängigkeit vom Ergebnis des Abgleichs und in Abhängigkeit vom Lenkmodus L Lenkkommandos K₁, K₂ für die lenkbaren Achsen 14, 15 ermittelt. Diese Lenkkommandos K₁, K₂ dienen selbstverständlich dazu, die Ist-Fahrspur R_{I} an die Soll-Fahrspur Rs anzugleichen. Je nach Lenkmodus L können "tatsächliche" Lenkkommandos K₁, K₂ nur für eine Achse 14, 15 erzeugt werden, während die andere Achse 14, 15 in einer Mittelposition arretiert bleibt. Auch könnten die Lenckommandos K₁, K₂ so erstellt werden, dass die Vorderachse 14 durch die Deichsel 20 zwangsgelenkt wird, so dass ein bestimmter Deichselwinkel immer mit einem bestimmten Lenkwinkel der Vorderachse 14 korrespondiert. In einem weiteren Schritt S240 wird die Landmaschine 10 mittels der Lenkaktoren 20, 21 entsprechend der Lenkkommandos L₁, L₂ gelenkt. In Schritt S250 wird überprüft, ob die Straßenfahrt beendet wurde. Falls ja, endet das Verfahren. Falls nein, kehrt das Verfahren zu Schritt S150 zurück und die beschriebenen Schritte werden wiederholt.

## Patentansprüche

1. Lenkverfahren für eine Landmaschine (10), welche während einer Straßenfahrt an ein Zugfahrzeug (30) angehängt ist, welches entlang einer Zugfahrzeug-Fahrspur (Rz) fährt, wobei:
- ausgehend von einer Mehrzahl von möglichen Lenkmodi (L) der Landmaschine (10), für wenigstens einen Teil der Straßenfahrt ein Lenkmodus (L) festgelegt wird (S170),
- basierend auf sensorischer Messung (S180) Kinematikdaten ermittelt werden (S190), die eine Kinematik der Landmaschine (10) beschreiben,
- basierend auf sensorischer Messung (S180) Fahrspur-Informationen betreffend das Zugfahrzeug (30) ermittelt werden (S200) und die Kinematikdaten hiermit abgeglichen werden (S220),
- in Abhängigkeit vom Ergebnis des Abgleichs sowie in Abhängigkeit vom aktuell festgelegten Lenkmodus (L) automatisch Lenkkommandos (K₁, K₂) für wenigstens eine lenkbare Achse (14, 15) der Landmaschine (10) ermittelt werden (S230), um die Landmaschine (10) angepasst an die Zugfahrzeug-Fahrspur (R_{F}) zu lenken, und
- die Landmaschine (10) automatisch durch die Lenkkommandos (K₁, K₂) gelenkt wird (S240).

2. Lenkverfahren nach Anspruch 1, **dadurch gekennzeichnet, dass** die ermittelten Fahrspur-Informationen einer Berechnungs-Fahrspur (Rs) des Zugfahrzeugs (30) entsprechen und die Kinematikdaten einer Ist-Fahrspur (R_{I}) der Landmaschine (10) entsprechen, wobei die Ist-Fahrspur (R_{I}) mit einer Soll-Fahrspur (Rs) abgeglichen wird (S220), die von der Berechnungs-Fahrspur (Rs) in Abhängigkeit vom aktuell festgelegten Lenkmodus (L) abgeleitet ist, und in Abhängigkeit vom Ergebnis des Abgleichs die Lenkkommandos (K₁, K₂) ermittelt werden (S240).

3. Lenkverfahren nach einem der vorangehenden Ansprüche, **dadurch gekennzeichnet, dass** der Lenkmodus (L) wenigstens teilweise durch eine Benutzereingabe (E) und/oder wenigstens teilweise automatisch festgelegt wird (S170).

4. Lenkverfahren nach einem der vorangehenden Ansprüche, **dadurch gekennzeichnet, dass** die Landmaschine (10) durch eine zug- und druckübertragende Deichsel (20) mit dem Zugfahrzeug (30) verbunden ist, welche sowohl auf Seiten des Zugfahrzeugs (30) als auch auf Seiten der Landmaschine (10) schwenkbar angebunden ist.

5. Lenkverfahren nach einem der vorangehenden Ansprüche, **dadurch gekennzeichnet, dass** die Kinematikdaten und/oder die Fahrspur-Informationen basierend auf einer Messung durch wenigstens einen Trägheitssensor (12), einen Winkelsensor (17) zur Bestimmung eines Deichselwinkels und/oder einen Positionssensor (16) zur Bestimmung einer Relativposition des Zugfahrzeugs (30) zur Landmaschine (10) ermittelt werden.

6. Lenkverfahren nach einem der vorangehenden Ansprüche, **dadurch gekennzeichnet, dass** der Lenkmodus (L) in Abhängigkeit von Geometriedaten (G_{A}, G_{D}, G_{F}, G_{L}, Gz) festgelegt wird (S170), welche eine Geometrie des Zugfahrzeugs (30), der Deichsel (20) und/oder der Landmaschine (10) beschreiben.

7. Lenkverfahren nach einem der vorangehenden Ansprüche, **dadurch gekennzeichnet, dass** die Landmaschine (10) einen Fahrzeugkörper (26) aufweist, an welchen wenigstens ein Anbaugerät (27) ankoppelbar ist, wobei Geometriedaten (G_{L}) der Landmaschine (10) in Abhängigkeit von wenigstens einem an den Fahrzeugkörper (26) angekoppelten Anbaugerät (27) angepasst werden (S140) und der Lenkmodus (L) entsprechend festgelegt wird (S170).

8. Lenkverfahren nach einem der vorangehenden Ansprüche, **dadurch gekennzeichnet, dass** bei Identifizierung (S120) eines Anbaugeräts (27) die Geometriedaten (G_{L}) der Landmaschine (10) automatisch angepasst werden (S140).

9. Lenkverfahren nach einem der vorangehenden Ansprüche, **dadurch gekennzeichnet, dass** in wenigstens einem Lenkmodus (L) anhand der Fahrspur-Informationen und von Geometriedaten (Gz) des Zugfahrzeugs (30) ein Bewegungsbereich (Bz) des Zugfahrzeugs (30) ermittelt wird (S210) und die Lenkkommandos (K₁, K₂) in Abhängigkeit vom Bewegungsbereich (Bz) und den Geometriedaten (G_{L}) der Landmaschine (10) ermittelt werden (S230).

10. Lenkverfahren nach einem der vorangehenden Ansprüche, **dadurch gekennzeichnet, dass** in wenigstens einem Lenkmodus (L) ein Bewegungsbereich der Landmaschine (10) wenigstens einseitig durch den (Bz) des Zugfahrzeugs (30) begrenzt ist.

11. Lenkverfahren nach einem der vorangehenden Ansprüche, **dadurch gekennzeichnet, dass** in Abhängigkeit vom Lenkmodus (L) wenigstens eine lenkbare Achse (14, 15) arretiert wird.

12. Lenkverfahren nach einem der vorangehenden Ansprüche, **dadurch gekennzeichnet, dass** der Lenkmodus (L) in Abhängigkeit von einem Betrag einer Fahrgeschwindigkeit und/oder vom Vorliegen einer Rückwärtsfahrt festgelegt wird.

13. Landmaschine (10), welche dazu eingerichtet ist, während einer Straßenfahrt an ein Zugfahrzeug (30) angehängt zu sein, welches entlang einer Zugfahrzeug-Fahrspur (Rz) fährt, und welche eine Steuervorrichtung (1) aufweist, die dazu eingerichtet ist:
- ausgehend von einer Mehrzahl von möglichen Lenkmodi (L) der Landmaschine (10), eine Festlegung (S170) eines Lenkmodus (L) für wenigstens einen Teil der Straßenfahrt zu ermöglichen,
- basierend auf sensorischer Messung (S180) Kinematikdaten zu ermitteln (S190), die eine Kinematik der Landmaschine (10) beschreiben,
- basierend auf sensorischer Messung (S180) Fahrspur-Informationen betreffend das Zugfahrzeug (30) zu ermitteln (S200) und die Kinematikdaten hiermit abzugleichen (S220),
- in Abhängigkeit vom Ergebnis des Abgleichs sowie in Abhängigkeit vom aktuell festgelegten Lenkmodus (L) automatisch Lenkkommandos (K₁, K₂) für wenigstens eine lenkbare Achse (14, 15) der Landmaschine (10) zu ermitteln (S230), um die Landmaschine (10) angepasst an die Zugfahrzeug-Fahrspur (Rz) zu lenken, und
- die Landmaschine (10) automatisch durch die Lenkkommandos (K₁, K₂) zu lenken (S240).

14. Gespann (5) mit einem Zugfahrzeug und einer Landmaschine (10), welche während einer Straßenfahrt an das Zugfahrzeug (30) angehängt ist, welches entlang einer Zugfahrzeug-Fahrspur (Rz) fährt, wobei das Gespann eine Steuervorrichtung (1) aufweist, die dazu eingerichtet ist:
- ausgehend von einer Mehrzahl von möglichen Lenkmodi (L) der Landmaschine (10), eine Festlegung (S170) eines Lenkmodus (L) für wenigstens einen Teil der Straßenfahrt zu ermöglichen,
- basierend auf sensorischer Messung (S180) Kinematikdaten zu ermitteln (S190), die eine Kinematik der Landmaschine (10) beschreiben,
- basierend auf sensorischer Messung (S180) Fahrspur-Informationen betreffend das Zugfahrzeug (30) zu ermitteln (S200) und die Kinematikdaten hiermit abzugleichen (S220),
- in Abhängigkeit vom Ergebnis des Abgleichs sowie in Abhängigkeit vom aktuell festgelegten Lenkmodus (L) automatisch Lenkkommandos (K₁, K₂) für wenigstens eine lenkbare Achse (14, 15) der Landmaschine (10) zu ermitteln (S230), um die Landmaschine (10) angepasst an die Zugfahrzeug-Fahrspur (Rz) zu lenken, und
- die Landmaschine (10) automatisch durch die Lenkkommandos (K₁, K₂) zu lenken (S240).

15. Steuervorrichtung (1) zum Steuern einer Landmaschine (10), welche während einer Straßenfahrt an ein Zugfahrzeug (30) angehängt ist, welches entlang einer Zugfahrzeug-Fahrspur (Rz) fährt, wobei Steuervorrichtung (1) dazu eingerichtet ist:
- ausgehend von einer Mehrzahl von möglichen Lenkmodi (L) der Landmaschine (10), eine Festlegung (S170) eines Lenkmodus (L) für wenigstens einen Teil der Straßenfahrt zu ermöglichen,
- basierend auf sensorischer Messung (S180) Kinematikdaten zu ermitteln (S190), die eine Kinematik der Landmaschine (10) beschreiben,
- basierend auf sensorischer Messung (S180) Fahrspur-Informationen betreffend das Zugfahrzeug (30) zu ermitteln (S200) und die Kinematikdaten hiermit abzugleichen (S220),
- in Abhängigkeit vom Ergebnis des Abgleichs sowie in Abhängigkeit vom aktuell festgelegten Lenkmodus (L) automatisch Lenkkommandos (K₁, K₂) für wenigstens eine lenkbare Achse (14, 15) der Landmaschine (10) zu ermitteln (S230), um die Landmaschine (10) angepasst an die Zugfahrzeug-Fahrspur (Rz) zu lenken, und
- die Landmaschine (10) automatisch durch die Lenkkommandos (K₁, K₂) zu lenken (S240).
